# EUROPEAN PATENT SPECIFICATION

(11) **EP 2 554 475 B1**
(45) Date of publication and mention of the grant of the patent: **23.03.2016**
(21) Application number: 11400040.9
(22) Date of filing: 04.08.2011
(51) Int. Cl.: B64C 27/33

(54) **Planar flexbeam unit**
Ebene Flexbeam-Einheit
Unité de poutre de flexion planaire

(43) Date of publication of application: 06.02.2013
(73) Proprietor: AIRBUS HELICOPTERS DEUTSCHLAND GmbH, 86609 Donauwörth (DE)
(72) Inventor: Enenkl, Bernhad, 85461 Bockhorn (DE); Pfaller, Rupert, 85521 Riemerling (DE)
(74) Representative: GPI & Associés

(56) References cited:
- WO-A1-2004/089748
- US-A- 5 091 029
- US-A- 5 284 420
- US-A1- 2006 216 151

## Description

The invention relates to a planar flexbeam unit with the features of claim 1.

The rotor system of a helicopter mounts and supports the helicopter blades to the engine output shaft and includes, among other things, a hub, which is mounted on the output shaft and a set of spindles or yokes, which attach the blades to the hub. The rotor system must withstand the tremendous centrifugal force the blades apply during rotation while permitting their flapping, pitch and lead/lag motions. The many different systems utilized for this task are variations on basic designs, referred to as articulated and bearingless or hingeless. The articulated system utilizes a rigid spindle equipped with hinges and bearings to facilitate the aforementioned blade motions. The bearingless system comprises special composite material spindles, so called flexbeams, that are flexible enough to twist to allow blade movement without bearings and additional mechanics. For hingeless rotors the function of a discrete hinge is performed by a structure which is weak against bending in a certain area but of course transfers all the loads such as shear forces, centrifugal forces, etc.. An equivalent offset of a flapping hinge is defined for such hingeless rotors.

A certain minimum cross-section is required for a flexbeam to support centrifugal blade loads and static blade droop loads, while the aforementioned blade movements require the flexbeam to also have considerable torsional flexibility. The flexbeam cannot be too soft in chordwise and flapwise flexibility, though, because significant flapwise blade deformation especially at conditions with low rotational speeds, or buckling, will occur under normal operating conditions. Tradeoffs, therefore, are to be made between centrifugal loading strength, fatigue strength, torsional flexibility, chordwise and flapwise flexibility. The current designs are limited in reducing the flapping hinge offset and currently no automatic manufacturing is possible. The minimum cross-section required for a flexbeam in combination with a cuff for the pitch control as surrounding structure, namely a closed cuff with the flexbeam inside, increases the aerodynamic drag.

The document US 5 284 420 A discloses a multi-blade rotor for a helicopter rear anti-couple propeller with a hub body to which are connected twistable straps each formed by two bundles of fibers with a flattened cross section arranged radially around the hub, each of the bundles forming at least two halves of different blades and being twisted and curved in the region of its passage near the center of the hub body in such a way that it forms a tangent to the circumference of the center of the hub body along the greater dimension of its cross section. The number of blades of said multi-blade rotor may be even or odd. The central part of said multi-blade rotor forms a hub with a reduced bulk and blade retention strong and twistable elements are arranged in the hub in such a way as to best distribute the stresses between the working fibers of said blade retention elements. As the bundles forming the two halves of different blades are twisted and curved in the region near the center of the hub body said bundles have relatively high torsional and bending moments of inertia leading to a relatively high flapping hinge offset. The fabrication of said twisted and curved bundles is relatively complicated. Another example can be found in document US5091029.

It is therefore an object of the present invention to provide a planar flexbeam unit as interface between a rotor shaft and a multi-blade rotor, especially for a multi-blade main rotor of a helicopter with a low flapping hinge offset. It is a further object of the present invention to provide a planar flexbeam unit suitable for automatic manufacturing.

The solution is provided with a planar flexbeam unit as interface between a rotor shaft and a multi-blade rotor, especially for a multi-blade main rotor of a helicopter, with the features of claim 1. Preferred embodiments of the invention are presented with the subclaims.

According to the invention a planar flexbeam unit is provided as an interface between a rotor shaft and a multi-blade rotor, especially as an interface for a multi-blade main rotor of a helicopter, said planar flexbeam unit being made of composite compound with preferably more than four essentially planar torque arms, each torque arm having essentially a concave profile on either side along its radial extension and being integral with its adjacent torque arms at a root area of said torque arm with a relatively big width with regard to a thickness of said torque arm at the root area of said torque arm, such that a preferred ratio of thickness/width is smaller than 1:3, each of said torque arms comprising two bundles of straight-essentially-uni-directional fibers agglomerated by a hardened synthetic resin and arranged along the essentially concave profile along its radial extension, each of said bundles passing into two essentially opposed torque arms without remarkable change of direction, namely said changes of direction being less than 35°. According to a main feature of the inventive flexbeam unit forces and moments such as centrifugal force, flap- lead lag bending moments acting on one torque arm are countered directly by two opposite torque arms via said bundles built from essentially unidirectional fibres as the main load carrying elements passing into two essentially opposed torque arms and allowing a reduced number of parts. The inventive flexbeam unit allows a root area with a big width resulting in a low flapping hinge offset for each of the torque arms, said low flapping hinge offset being equivalent to a low flapping stiffness at the inner side of the flexbeam unit. The concave profile on either side along the radial extension provides for reduced stiffness of the torque arms against lead lag- and/or pitching moments. The inventive flexbeam unit allows simple and light weight design as centrifugal loads at the center of the inventive flexbeam unit are avoided. As a further advantage the inventive flexbeam unit allows automatic and cheap manufacturing.

According to a preferred embodiment of the invention the center of the planar flexbeam unit is provided with an essentially circular opening for reduced stiffness and as an option to encompass further equipment such as a rotor hub and a damping unit between the rotor shaft and the multi-blade rotor.

According to a further preferred embodiment of the invention each torque arm has an essentially triangular shape at its root area next to its adjacent torque arms. The triangle shape with a big width at the root area and concave lateral profiles in radial direction of each torque arm is particularly suitable to transfer torque moments as delivered by the rotor shaft.

According to a further preferred embodiment of the invention the root area has a reduced thickness rectangular to the essentially planar torque arms. The inventive flexbeam unit allows a root area with small thickness close to the rotor shaft and a big width resulting in a low flapping hinge offset for each of the torque arms, said low flapping hinge offset being equivalent to a low flapping stiffness at the inner side of the flexbeam unit. The small thickness of the torque arms allows low aerodynamic drag and increased comfort relative to gust sensitivity.

According to a further preferred embodiment of the invention the root area has at least one hole through the essentially planar torque arms for further improved stiffness characteristics and reduced weight. This hole is adapted to allow the incorporation of additional devices for damping of the rotor hub's and blade's movements and to allow the incorporation of devices allowing the inclination of the complete rotor hub.

According to a further preferred embodiment of the invention 5 torque arms are foreseen allowing crossing bundles of straight-uni-directional fibers at the root area to take up in a crossing bundle any loads resulting from any slight change in direction resulting from the concave shape in any other crossing bundle.

According to a further preferred embodiment of the invention 4 or 6, 7, 8, ... torque arms are foreseen allowing crossing bundles of straight-uni-directional fibers at the root area to take up in a crossing bundle any loads resulting from any slight change in direction in any other crossing bundle.

According to a further preferred embodiment of the invention a power transmission element is provided for transmitting power from said rotor shaft to said multi blade rotor, said power transmission element being flexible around any axis perpendicular to the rotor shaft for further reduced flapping stiffness between 0 and 100%. Said power transmission element allows avoidance of any direct fixation to the rotor shaft and contributes with less gripping to improved flexibility of the inventive planar flexbeam unit allowing the inclination of the complete rotor hub.

According to a further preferred embodiment of the invention said power transmission element is provided with rods, said rods being respectively articulated with a first end to a circumference of said rotor shaft and with a second end to an outside circumference between two of said torque arms of said multi blade rotor.

According to a further preferred embodiment of the invention said power transmission element is provided with rods, said rods being respectively articulated with a first end to a circumference of said rotor shaft and with a second end to the center of the planar flexbeam unit between or aligned with said torque arms

According to a further preferred embodiment of the invention said rods are arranged respectively radially or tangentially to said circumference of said rotor shaft.

According to a further preferred embodiment of the invention the center is provided with integrated connection means as power transmission element to the rotor shaft.

According to a further preferred embodiment of the invention the power transmission means comprise centrally arranged lead-lag damping means.

Preferred embodiments of the invention are shown with reference to the following description and the attached drawings.
Fig. 1 shows a spherical view of a rotor shaft with a planar flexbeam unit according to the invention,
Fig. 2 shows a top view of the planar flexbeam unit according to the invention,
Fig. 3 shows a top view of a preferred embodiment of the planar flexbeam unit according to the invention,
Fig. 4a shows a top view of a rotor shaft connection to the planar flexbeam unit according to the invention,
Fig. 4b shows a top view of a further rotor shaft connection to the planar flexbeam unit according to the invention,
Fig. 5 shows a spherical view of a rotor shaft with a further preferred embodiment of the planar flexbeam unit according to the invention,
Fig. 6 shows a partial cross sectional view through the rotor shaft connection of Fig. 5, and
Fig. 7 shows a top view of a further preferred embodiment of the planar flexbeam unit according to the invention.

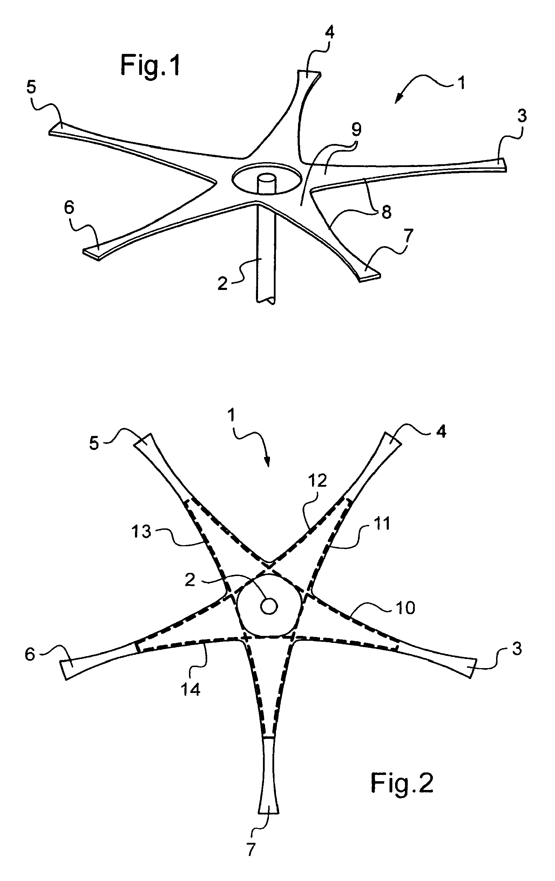

According to Fig. 1 a planar flexbeam unit 1 is centered at a rotor shaft 2 for a multi-blade main rotor (not shown) of a helicopter. The planar flexbeam unit 1 comprises 5 a concentric rotor hub (not shown) and essentially planar torque arms 3 - 7 extending radially from said center with an essentially circular opening. The 5 torque arms 3 - 7 are equally angular distant. The planar flexbeam unit 1 is made of composite compound.

Each torque arm 3 -7 has an essentially concave profile 8 on either side along its radial extension and is integral with its adjacent torque arms 3 - 7 at a root area 9 of said torque arms 3 - 7 with a relatively big width resulting in a thickness to width ratio smaller than 1:3. The thickness is defined as being rectangular to the planar flexbeam unit 1 and the width corresponds to the respective extensions of the torque arms 3 - 7 in their chord direction.

According to Fig. 2 corresponding features are referred to with the same references as in Fig. 1. Each of said torque arms 3 - 7 comprises two bundles 10 - 14 of straight-essentially-uni-directional fibers agglomerated by a hardened synthetic resin and arranged along the essentially concave profile 8 in the radial direction, each of said bundles 10 - 14 passing into two essentially opposed torque arms 3 - 7 with an essentially constant curvature and without remarkable change of direction, said change of direction being less than 35° along the entire length of any of said bundles 10 - 14. The bundles 10 - 14 are arranged to take up in any of the bundles 10 - 14 crossing in the center near to the respective root area 9 any loads resulting from any slight change in direction in any of the bundles 10 - 14.

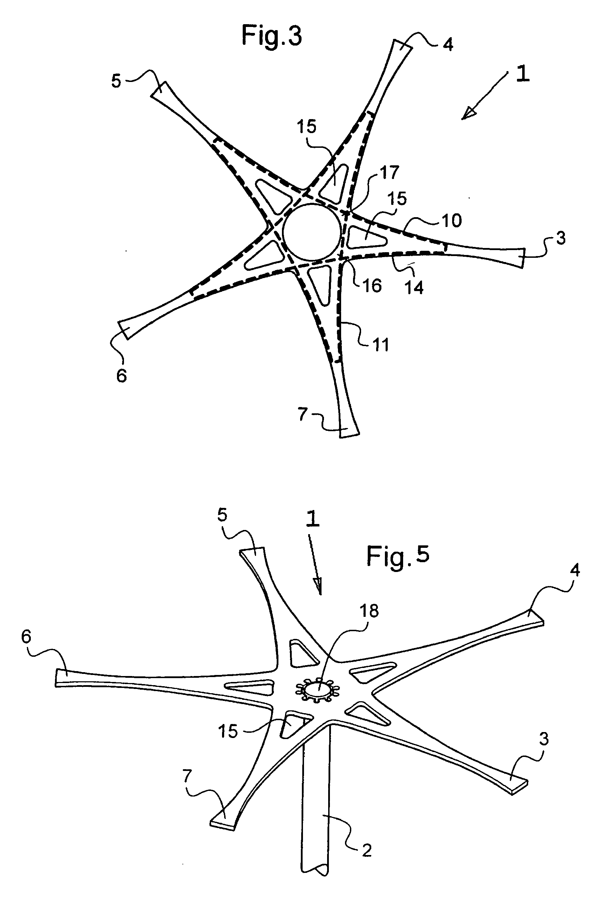

According to Fig. 3 corresponding features are referred to with the same references as in Fig. 1, 2. Each of said torque arms 3 - 7 of said planar flexbeam unit 1 comprises a hole 15 with a basically triangular shape through the respective root area 9 and adapted to the essentially concave profiles 8 such that for torque arm 3 the respective bundles 10, 14 pass laterally between the essentially concave profiles 8 in the radial direction and the triangle 15 from the tip to the base and bundle 11 passes along said base of triangle 15 through the center into the two adjacent torque arms 4, 7. At the two crossings 16, 17 of bundle 11 with the bundles 10, 14 forces resulting from any change of direction of the bundles 10, 11, 14 can be transferred between said bundles 10, 11, 14. The same concept applies to the other torque arms 4 - 7 with their associated bundles 10 - 14 of straight-uni-directional fibers.

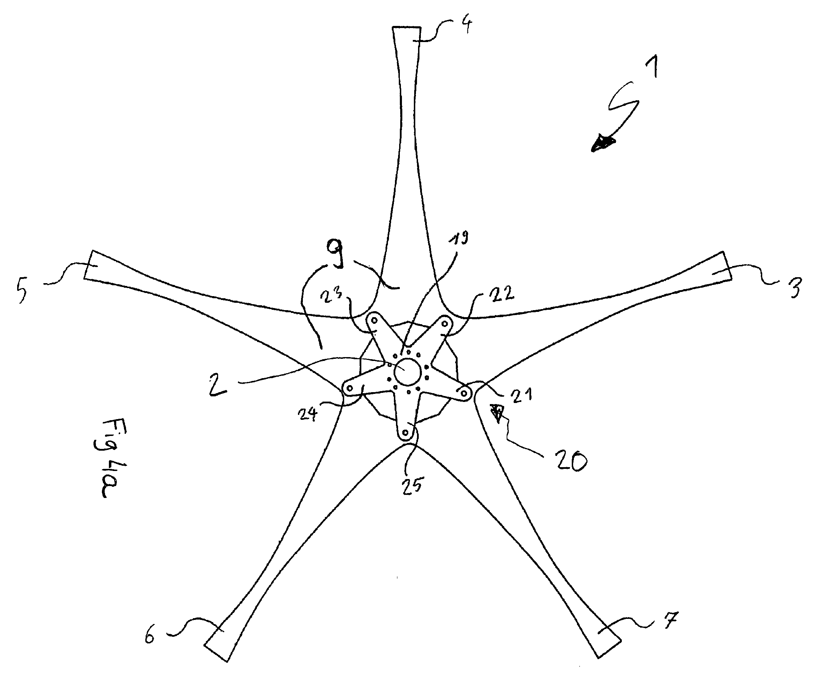

According to Fig. 4a corresponding features are referred to with the same references as in Fig. 1 - 3. The planar flexbeam unit 1 is provided with power transmission means 20 for transmitting power from said rotor shaft 2 to said multi blade rotor. The power transmission means 20 is located inside a polygonal opening of the planar flexbeam unit 1. An inner ring 19 is fixed coaxially to the rotor shaft 2 with rods 21 - 25 with a first end as part of the inner ring 19 at said rotor shaft 2 and with a second end respectively to the center of the planar flexbeam unit 1 between two of said torque arms 3 - 7. The respective second ends of said rods 21 - 25 are fixed with bolts to the center. The diameter of the inner ring 19 and/or the respective lengths of the rods 21 - 25 vary to allow any position of the rods 21 - 25 between radial and tangential relative to the inner ring 19.

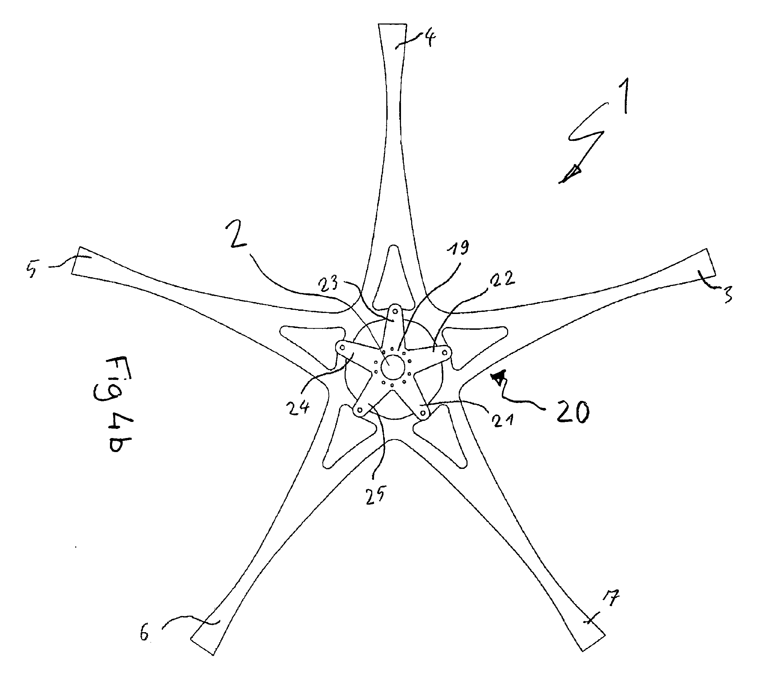

According to Fig. 4b corresponding features are referred to with the same references as in Fig. 1 - 4a. The planar flexbeam unit 1 is provided with power transmission means 20 for transmitting power from said rotor shaft 2 to said multi blade rotor. The inner ring 19 is fixed coaxially to the rotor shaft 2 with rods 21 - 25 with a first end as part of the inner ring 19 at said rotor shaft 2 and with a second end respectively to the centre between the respective root areas 9 of said torque arms 3 - 7. The diameter of the inner ring 19 and the respective lengths of the rods 21 - 25 vary to allow any position of the rods 21 - 25 between radial and tangential relative to the inner ring 19.

According to Fig. 5 corresponding features are referred to with the same references as in Fig. 1 - 4. The planar flexbeam unit 1 is provided with a concentric rotor hub with integrated connection means 18 as coaxial power transmission means 20 for transmitting power from said rotor shaft 2 to said multi blade rotor. Said integrated connection means 18 are regularly distributed around the essentially circular opening at the center of the planar flexbeam unit 1 for mounting of coupling means (not shown) to the rotor shaft 2.

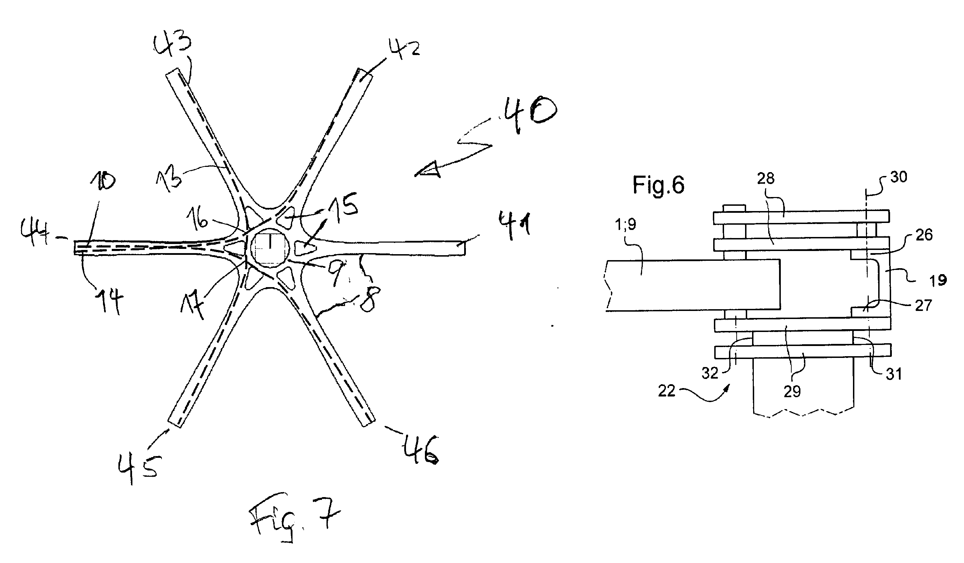

According to Fig. 6 corresponding features are referred to with the same references as in Fig. 1 - 5. The power transmission means 20 for transmitting power from said rotor shaft 2 to the planar flexbeam unit 1 is provided with the inner ring 19 fixed coaxially to the rotor shaft 2. The inner ring 19 comprises an upper flange 26 and a lower flange 27 to mount any of the rods 21 - 25 to the inner ring 19. Any of the rods 21 - 25 are composed of two upper bending plates 28 and two lower bending plates 29 with all of said bending plates 28, 29 being essentially parallel to each other. Any of the rods 21 - 25 are fixed with respective inner bolts 30, 31 to the upper flange 26 and the lower flange 27 respectively to be articulated with the first end relative to the inner ring 19 at said rotor shaft 2. The root area 9 of the planar flexbeam unit 1 is arranged parallel in between the two upper bending plates 28 and the two lower bending plates 29. An outer bolt 32 connects the two upper bending plates 28 with the two lower bending plates 29 to be fixed respectively rectangularly through said center of the planar flexbeam unit 1 between two of said torque arms 3 - 7. Any of the rods 21 - 25 allow increasing flexure from the inner ring 19 towards said outside circumference.

According to Fig. 7 corresponding features are referred to with the same references as in Fig. 1 - 6. A planar flexbeam unit 40 comprises six torque arms 41 - 46 each of which comprising a hole 15 with a basically triangular shape next to the respective root area 49 and adapted to the essentially concave profiles 8 such that for torque arm 44 the respective bundles 10, 14 pass laterally between the essentially concave profiles 8 in the radial direction and the triangle 15 from the tip to the base and bundle 13 passes along said base of triangle 15 through the center into the two adjacent torque arms 43, 45. At the two crossings 16, 17 of bundle 13 with the bundles 10, 14 forces resulting from any change of direction of the bundles 10, 13, 14 can be transferred between said bundles 10, 13, 14. The same concept applies to the other torque arms 41, 42 and 46 with their respective associated bundles of straight-uni-directional fibers.

The power transmission means 20 may comprise lead-lag damping means.

### Reference List

planar flexbeam unit 1, 40
rotor shaft 2
planar torque arms 3 - 7, 41 - 46
concave profile 8
root area 9
bundles 10 - 14 of straight-uni-directional fibers
hole 15
crossings 16, 17
integrated connection means 18
inner ring 19
power transmission means 20
rods 21 - 25
upper flange 26
lower flange 27
upper bending plates 28
lower bending plates 29
inner bolts 30, 31
outer bolt 32

## Claims

1. A planar flexbeam unit (1, 40) as interface between a rotor shaft (2) and a multi-blade rotor, especially for a multi-blade main rotor of a helicopter, comprises 4 or more essentially planar torque arms (3 - 7, 41 - 46), each torque arm (3 - 7, 41 - 46) having a concave profile (8) along its radial extension and being integral with its adjacent torque arms (3 - 7, 41 - 46), each of said torque arms (3 - 7, 41 - 46) comprising two bundles (10 - 14) of straight, essentially uni-directional fibers agglomerated by a hardened synthetic resin and arranged along the concave profile (8) along its radial extension, each of said bundles passing essentially symmetrical with regard to a respective radial axis of one of said torque arms (3 - 7, 41 - 46) from said respective torque arm (3 - 7, 41 - 46) into two essentially opposed torque arms (3 - 7, 41 - 46) with an essentially constant curvature,
**characterized in that**
a power transmission element (20) is provided for transmitting power from said rotor shaft (2) to said multi blade rotor, said power transmission element (20) being flexible about any axis perpendicular to the rotor shaft (2) and said power transmission element (20) being provided with rods (21 - 25), said rods (21 - 25) being composed of two upper bending plates (28) and two lower bending plates (29) and being respectively articulated with a first end, by means of inner bolts (30, 31), -to an upper flange (26) of an inner ring (19) at said rotor shaft (2) and to a lower flange (27) of the inner ring (19) at said rotor shaft (2), and with a second end, by means of an outer bolt (32), to the center between said torque arms (3 - 7, 41 - 46), and wherein the bending lates are essentially parallel to each other and parallel to the planar flexbeam unit (1, 40), the planar flexbeam unit (1, 40) being arranged between the upper bending plates (28) and the lower bending plates (29).

2. The flexbeam unit (1, 40) according to claim 1,
**characterized in that** its center is provided with an essentially circular opening.

3. The flexbeam unit (1, 40) according to claim 1,
**characterized in that** each torque arm (3 - 7, 41 - 46) has an essentially triangular shape at its root area (9) next to its adjacent torque arms (3 - 7, 41 - 46).

4. The flexbeam unit (1, 40) according to claim 3,
**characterized in that** the root area (9) has a thickness to width ratio smaller than 1:3 rectangular to the essentially planar torque arms (3 - 7, 41 - 46).

5. The flexbeam unit (1, 40) according to claim 3,
**characterized in that** the root area (9) has at least one hole (15) through the essentially planar torque arms (3 - 7, 41 - 46).

6. The flexbeam unit (1, 40) according to claim 3,
**characterized in that** the root area (9) comprises a shear stiff or quasiisotropic layered structure next to the essentially planar torque arms (3 - 7, 41 - 46).

7. The flexbeam unit (1, 40) according to claim 1,
**characterized in that** 5 or 6 torque arms (3 - 7, 41 - 46) are foreseen.

8. The flexbeam unit (1, 40) according to claim 2,
**characterized in that** its center is provided with integrated connection means (18) to the rotor shaft (2).

## Patentansprüche

1. Ebene Flexbeam-Einheit (1, 40) als Verbindung zwischen einer Rotorwelle (2) und einem Rotor mit einer Mehrzahl von Rotorblättern, insbesondere für einen Hauptrotor eines Hubschraubers mit einer Mehrzahl von Rotorblättern, mit vier oder mehr im Wesentlichen ebenen Drehmomentarmen (3-7, 41-46), wobei jeder Drehmomentarm (3-7, 41-46) entlang seiner radialen Erstreckung ein konkaves Profil (8) aufweist und einstöckig mit seinem benachbarten Drehmomentarm (3-7, 41-46) ausgeführt ist, wobei jeder der Drehmomentarme (3-7, 41-46) zwei Bündel (10-14) grader, unidirektionaler Fasern aufweist, die durch ein ausgehärtetes Kunstharz agglomeriert sind und entlang der radialen Erstreckung des konkaven Profils (8) angeordnet sind, wobei jedes Bündel im Wesentlichen symmetrisch bezüglich einer jeweiligen Radialachse eines der Drehmomentarme (3-7, 41-46) von dem jeweiligen Drehmomentarm (3-7, 41-46) zu zwei im Wesentlichen gegenüberliegenden Drehmomentarmen (3-7, 41-46) mit einer im Wesentlichen konstanten Krümmung verläuft,
**dadurch gekennzeichnet, dass** ein Kraftübertragungselement (20) vorgesehen ist zum Übertragen von Kraft von der Rotorwelle (2) zu dem Rotor mit einer Mehrzahl von Rotorblättern, wobei das Kraftübertragungselement (20) um jede zur Rotorwelle (2) senkrechte Achse flexibel ist und wobei das Kraftübertragungselement (20) mit Streben (21-25) versehen ist, wobei die Streben (21-25) aus zwei oberen Biegeplatten (28) und zwei unteren Biegeplatten (29) bestehen und jeweils mit einem Ende durch innere Bolzen (30, 31) an einem oberen Flansch (26) eines inneren Rings (19) an der Rotorwelle (2) und an einem unteren Flansch (27) des inneren Rings (19) an dem Rotorschaft (2) angelenkt sind, und mit einem zweiten Ende durch einen äußeren Bolzen (32) an der Mitte zwischen den Drehmomentarmen (3-7, 41-46) angelenkt sind, und wobei die Biegeplatten im Wesentlichen parallel zueinander und parallel zu der ebenen Flexbeam-Einheit (1, 40) sind, wobei die ebene Flexbeam-Einheit (1, 40) zwischen den oberen Biegeplatten (28) und den unteren Biegeplatten (29) angeordnet ist.

2. Flexbeam-Einheit (1, 40) nach Anspruch 1,
**dadurch gekennzeichnet, dass** ihre Mitte mit einer im Wesentlichen kreisrunden Öffnung versehen ist.

3. Flexbeam-Einheit (1, 40) nach Anspruch 1,
**dadurch gekennzeichnet, dass** jeder Drehmomentarm (3-7, 41-46) eine im Wesentlichen dreieckige Form in seinem Wurzelbereich (9) in der Nähe von seinem benachbarten Drehmomentarm (3-7, 41-46) aufweist.

4. Flexbeam-Einheit (1, 40) nach Anspruch 3,
**dadurch gekennzeichnet, dass** der Wurzelbereich (9) ein Dicke-zu-Breite-Verhältnis aufweist, das kleiner als 1:3 ist, im rechten Winkel zu den im Wesentlichen ebenen Drehmomentarmen (3-7, 41-46) gemessen.

5. Flexbeam-Einheit (1, 40) nach Anspruch 3,
**dadurch gekennzeichnet, dass** der Wurzelbereich (9) mindestens ein Durchgangsloch (15) durch die im Wesentlichen ebenen Drehmomentarme (3-7, 41-46) aufweist.

6. Flexbeam-Einheit (1, 40) nach Anspruch 3,
**dadurch gekennzeichnet, dass** der Wurzelbereich (9) eine schersteife oder quasi isotropisch beschichtete Struktur in der Nähe der im Wesentlichen ebenen Drehmomentarme (3-7, 41-46) aufweist.

7. Flexbeam-Einheit (1, 40) nach Anspruch 1,
**dadurch gekennzeichnet, dass** fünf oder sechs Drehmomentarme (3-7, 41-46) vorgesehen sind.

8. Flexbeam-Einheit (1, 40) nach Anspruch 2,
**dadurch gekennzeichnet, dass** in ihrer Mitte integrierte Mittel (18) zur Verbindung mit der Rotorwelle (2) vorgesehen sind.

## Revendications

1. Un faisceau torsible plat (1, 40) en tant qu'interface entre un arbre de rotor (2) et un rotor multi-pales, en particulier pour un rotor principal multi-pales d'hélicoptère, comprend 4 ou plusieurs bras de tension (3 - 7.41 - 46) essentiellement plats, chaque bras de tension (3 - 7, 41 - 46) présentant un profil concave (8) le long de son extension radiale et étant solidaire de ses bras de tension adjacents ((3 - 7, 41 - 46), chacun desdits bars de tension comprenant deux faisceaux (10 - 14) de fibres rectilignes essentiellement unidirectionnelles agglomérées par une résine synthétique durcie et disposées le long du profil concave (8) le long de son extension radiale, chacun desdits faisceaux passant essentiellement symétriquement par rapport à un axe radial respectif d'un desdits bras de tension ((3 - 7,41 - 46) dudit bras de tension respectif ((3 - 7,41 - 46) dans deux bras de tension essentiellement opposés ((3 - 7, 41 - 46) selon une courbure essentiellement constante, [caractérisé en ce que]
un élément de transmission de puissance (20) est prévu pour transmettre la puissance dudit arbre de rotor (2) audit rotor multi-pales, ledit élément de transmission de puissance (20) étant flexible autour de tout axe perpendiculaire à l'arbre de rotor (2) et ledit élément de transmission de puissance (20) étant pourvu de bras (21 - 25), lesdits bras (21 - 25) étant composés de deux plaques de flexion supérieures (28) et de deux plaques de flexion inférieures (29) et étant respectivement articulés par une première extrémité, au moyen de vis intérieures (30, 31), à une bride supérieure (26) d'un anneau intérieur (19) au niveau dudit arbre de rotor (2) et à une bride inférieure (27) de l'anneau intérieur (19) au niveau dudit arbre de rotor (2), et par une seconde extrémité, au moyen d'une vis extérieure (32), au centre entre lesdits bras de tension (3 - 7, 41 - 46), et dans lequel les plaques de flexion sont essentiellement parallèles les unes aux autres et parallèles au faisceau torsible plat (1, 40), le faisceau torsible plat (1, 40) étant disposé entre les plaques de flexion supérieures (28) et les plaques de flexion inférieures (29).

2. Le faisceau torsible (1, 40) selon la revendication 1,
**caractérisé en ce que** son centre est pourvu d'une ouverture essentiellement circulaire.

3. Le faisceau torsible (1, 40) selon la revendication 1,
**caractérisé en ce que** chaque bras de tension (3 - 7, 41 - 46) présente une forme essentiellement triangulaire au niveau de sa zone de pied (9) près de ses bras de tension adjacents (3 - 7,41 - 46).

4. Le faisceau torsible (1, 40) selon la revendication 3,
**caractérisé en ce que** la zone de pied (9) présente un rapport épaisseur sur largeur inférieur à 1:3 perpendiculairement aux bras de tension essentiellement plats (3 - 7, 41 - 46).

5. Le faisceau torsible (1, 40) selon la revendication 3,
**caractérisé en ce que** la zone de pied (9) présente au moins un orifice (15) dans les bras de tension essentiellement plats (3 - 7,41 - 46).

6. Le faisceau torsible (1, 40) selon la revendication 3,
**caractérisé en ce que** la zone de pied (9) comprend une structure de cisaillement stratifiée rigide ou quasi-isotrope près des bras de tension essentiellement plats (3 - 7, 41 - 46).

7. Le faisceau torsible (1, 40) selon la revendication 1,
**caractérisé en ce que** 5 ou 6 bras de tension (3 - 7,41 - 46) sont prévus.

8. Le faisceau torsible (1, 40) selon la revendication 2,
**caractérisé en ce que** son centre est pourvu d'un moyen intégré de connexion (18) à l'arbre de rotor (2).
